(19) Europäisches Patentamt
European Patent Office
Office européen des brevets

(11) **EP 4 272 042 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **22716401.9**

(22) Anmeldetag: **21.03.2022**

(51) Internationale Patentklassifikation (IPC):
**G05B 23/02** *(2006.01)*

(52) Gemeinsame Patentklassifikation (CPC):
**G05B 23/0278**

(86) Internationale Anmeldenummer:
**PCT/EP2022/057334**

(87) Internationale Veröffentlichungsnummer:
**WO 2022/200263 (29.09.2022 Gazette 2022/39)**

(54) **URSACHENANALYSE EINER ANOMALIE AUF BASIS VON SIMULIERTEN SYMPTOMEN**

ANOMALY CAUSE ANALYSIS BASED ON SIMULATED SYMPTOMS

ANALYSE DE CAUSES D'UNE ANOMALIE EN FONCTION DE SYMPTÔMES SIMULÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2021 EP 21163887**

(43) Veröffentlichungstag der Anmeldung:
**08.11.2023 Patentblatt 2023/45**

(73) Patentinhaber: **Siemens Aktiengesellschaft**
**80333 München (DE)**

(72) Erfinder: **LABISCH, Daniel**
**76149 Karlsruhe (DE)**

(74) Vertreter: **Siemens Patent Attorneys**
**Postfach 22 16 34**
**80506 München (DE)**

(56) Entgegenhaltungen:
**EP-A1- 1 766 485     EP-A1- 2 068 220**
**US-A1- 2017 233 104**

**Beschreibung**

Die Erfindung betrifft ein Verfahren zur Ermittlung einer Ursache für eine Anomalie beim Betrieb einer technischen Anlage nach Anspruch 1. Zudem betrifft die Erfindung ein Computerprogramm mit durch einen Computer ausführbaren Programmcodeanweisungen nach Anspruch 4. Außerdem betrifft die Erfindung ein Speichermedium mit einem durch einen Computer ausführbaren Computerprogramm nach Anspruch 5, einen Server, insbesondere Operator Station Server, für eine technische Anlage nach Anspruch 6 und ein Leitsystem für eine technische Anlage nach Anspruch 7.

Eine technische Anlage, insbesondere Fertigungs- oder Prozessanlage, wird in der Regel fortwährend überwacht, um ungünstige Betriebszustände zu vermeiden. Bereits die Erkennung einer Abweichung im Betrieb der technischen Anlage (Anomalieerkennung) liefert hierbei einen Mehrwert, auch wenn die Suche nach einer Ursache für die Anomalie komplett manuell erfolgen muss. Der Mehrwert kann gesteigert werden, wenn auch eine Information darüber vorliegt, welche Komponenten der technischen Anlage auf welche Art und Weise von ihrem Normalverhalten abweichen (Symptomerkennung).

Eine manuelle Suche der Ursache ist mühselig und aufwändig. Es sind daher verschiedene Bestrebungen bekannt, die Ursachen für die Abweichungen automatisch bestimmen zu können, so dass das Anlagenpersonal direkt mit der Behebung der Ursache beginnen kann. Grundsätzlich kann hierbei zwischen zwei Vorgehensweisen unterschieden werden.

Ein erster Lösungsansatz verfolgt eine rein datenbasierte Ursachensuche. Eine Identifizierung der Ursache ist dabei jedoch nur möglich, wenn die Ursache in der Vergangenheit bereits aufgetreten und entsprechend klassifiziert worden ist.

Ein zweiter Lösungsansatz basiert auf Modellen. Dabei wird ausgehend von der Anlagenstruktur der technischen Anlage (bspw. dem Rohrleitungs- & Instrumentenfließschema) ein Modell der technischen Anlage bzw. deren Komponenten erzeugt. Dieses wird anschließend dazu genutzt, erkannten Symptomen mögliche Ursachen zuzuordnen.

Zur Modellierung kommen verschiedenste Verfahren in Frage. In der EP 2568348 A1, der EP 2587328 A1 und der EP 2587329 A1 wird eine derartige Modellierung auf Basis von sogenannten "Signed Diagraphs" beschrieben. Hiermit können für kleine Anlagentopologien (in der Größe einer Forschungsanlage) gute Ergebnisse bei der Ursachenermittlung erzielt werden. Für größere, reale technische Anlage sind die hierin beschriebenen Verfahren jedoch weniger gut geeignet. Insbesondere können Verzweigungen in der Anlagentopologie zu leeren Ursachenmengen oder zu übermäßig vielen möglichen Ursachen führen.

[1] und [2] geben in einer Review einen systematischen Überblick über mögliche Algorithmen zur Ursachenanalyse.

[1] Venkat Venkatasubramanian, Raghunathan Rengaswamy, Kewen Yin, Surya N. Kavuri; A review of process fault detection and diagnosis Part I: Quantitative model-based methods; Computers and Chemical Engineering, issue 27, pp.293-31t,2003.

[2]Venkat Venkatasubramanian, Raghunathan Rengaswamy, Surya N. Kavuri; A review of process fault detection and diagnosis Part II: Qualitative Models and Search Strategies; Computers and Chemical Engineering, issue 27, pp.313-326, 2003.

Allen hierin genannten Verfahren wohnen jedoch eine verhältnismäßig große Komplexität und ein hoher Modellierungsaufwand inne.

Will man ein vorhandenes Prozessmodell als Hilfestellung für die Anomalieerkennung nutzen, so finden sich hierzu in [3] und [4] folgende drei Ansätze:

- Parameterschätz- bzw. Parameteridentifikationsverfahren
- Beobachterbasierte Verfahren
- Paritätsgleichungen

: R. Isermann, "Modellbasierte Überwachung und Fehlerdiagnose von kontinuierlichen technischen Prozessen," at, Jun 2010

: S. X. Ding, "Model-Based Fault Diagnosis Techniques", Duisburg, 2013

Diese Anomalieerkennungsmethoden werden für eine Fehlerdiagnose um mehrere verschiedene Fehlermodelle erweitert. Stimmt statt dem realen Modell eines der Fehlermodelle mit den Prozessdaten überein, so kann ein Fehler diagnostiziert werden. Die Fehlermodelle betrachten dabei ein bekanntes Problem in genau einer Ausführung / Fehlerstärke und treffen dann eine Aussage über einen binären Fehler (bspw. Ventil funktioniert oder Ventil funktioniert nicht). Zeigen wiederum mehrere, sich ähnelnde Fehlermodelle ein positives Diagnoseergebnis, so kann keine klare Aussage oder Empfehlung getroffen werden.

Fehler in unterschiedlicher Stärke (z.B. Materialverunreinigungen, Prozesshemmungen, etc.) lassen sich nicht mit einem Modell mit konstanten Parametern abbilden, sondern können nur mit einer Vielzahl unterschiedlicher Fehlermodelle beschrieben werden. Dadurch entsteht ein erhöhter Aufwand für die Modellierung der Fehlermodelle.

Außerdem ergibt sich eine unüberschaubare Vielzahl an Modellen.

Alternativ werden beobachterbasierte Ansätze verwendet, die einen Fehlerparameter mit schätzen. Nachteilig an diesen ist, dass Beobachter nur bei einer hohen Modellgüte konvergieren und nur dann Bias-freie Schätzungen liefern, wenn beispielsweise alle Rauschannahmen korrekt erfüllt sind.

Allen Lösungen ist gemein, dass die Modellgüte sowohl für das Normal- als auch für das Fehlerverhalten sehr gut sein muss. Diese Anforderung wird schon für Modelle im Normalbetrieb nicht immer erfüllt. Mangels Fehlerdaten scheitert eine derart genaue Modellierung für Fehlerfälle jedoch im Allgemeinen.

In der EP 2 068 220 A1 ist ein Verfahren und ein System zur Durchführung von Diagnosen bezüglich der zugrundeliegenden Grundursachen bei Turbomaschinen offenbart.

Der Erfindung liegt die Aufgabe zugrunde, ein Verfahren zur Ermittlung einer Ursache für eine Anomalie beim Betrieb einer technischen Anlage anzugeben, das effizient, mit geringem Aufwand und automatisiert durchgeführt werden kann.

Diese Aufgabe wird gelöst durch ein Verfahren zur Ermittlung einer Ursache für eine Anomalie beim Betrieb einer technischen Anlage, insbesondere Fertigungs- oder Prozessanlage, nach Anspruch 1. Außerdem wird die Aufgabe gelöst durch ein Computerprogramm mit durch einen Computer ausführbaren Programmcodeanweisungen nach Anspruch 4. Außerdem wird die Aufgabe gelöst durch ein Speichermedium mit einem durch einen Computer ausführbaren Computerprogramm nach Anspruch 5 und einen Server, insbesondere Operator Station Server, für eine technische Anlage, insbesondere Fertigungs- oder Prozessanlage, nach Anspruch 6. Zudem wird die Aufgabe gelöst durch ein Leitsystem für eine technische Anlage, insbesondere Fertigungs- oder Prozessanlage, nach Anspruch 7. Vorteilhafte Weiterbildungen ergeben sich aus den abhängigen Ansprüchen.

Ein erfindungsgemäßes Verfahren umfasst die folgenden Verfahrensschritte:

a) Simulation eines fehlerfreien Betriebs der technischen Anlage mittels eines computerimplementierten Simulationswerkzeuges;

b) Simulation einer Mehrzahl von einzeln beim Betrieb der technischen Anlage auftretenden Ursachen für eine Anomalie;

c) Für die Mehrzahl von einzeln auftretenden Ursachen für eine Anomalie, jeweils Vergleichen des simulierten fehlerfreien Betriebszustandes mit dem simulierten Betriebszustand bei Vorliegen einer der auftretenden Ursachen für eine Anomalie, wobei aus dem Vergleich jeweils ein qualitatives Symptom abgeleitet wird, welches eine qualitative Abweichung des Betriebszustandes von dem fehlerfreien Betriebszustand beschreibt;

d) Realer Betrieb der technischen Anlage;

e) Für den Fall, dass eine Anomalie beim realen Betrieb der technischen Anlage auftritt, Bestimmen eines qualitativen Symptoms der Anomalie;

f) Vergleich des beim realen Betrieb der technischen Anlage bestimmten Symptoms mit jedem Symptom, das zuvor bei den Simulationen der Betriebszustände bei Vorliegen eines der auftretenden Ursachen für eine Anomalie abgeleitet worden ist;

g) Identifizieren von denjenigen Symptomen, die ein bestimmte Ähnlichkeitsmaß zu dem beim realen Betrieb der technischen Anlage bestimmten Symptom aufweisen und Hinterlegen der zu den identifizierten Symptomen gehörigen Ursachen für die Anomalie in einem Datenspeicher der technischen Anlage und/oder Anzeigen der zu den identifizierten Symptomen gehörigen Ursachen für die Anomalie.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, wie beispielsweise Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen in der Regel über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Das erfindungsgemäße Verfahren beruht darauf, dass reale Daten und simulierte Modelldaten über den Zwischenschritt des Einbezugs von Symptomen miteinander verglichen werden, um auf die Ursache für eine Anomalie beim Betrieb der technischen Anlage schließen zu können. Der Begriff "Symptom" stammt aus dem Bereich der Überwachung einer technischen Anlage und beschreibt die Abweichungen vom Normalbetrieb der technischen Anlage. Konkret umfasst ein Symptom die abweichenden Variablen und die Art der jeweiligen Abweichung. Diese Abweichung wird erfindungsgemäß nur qualitativ betrachtet. Beispiele für mögliche Symptome sind: Druckwert des Sensors X ist zu groß oder zu klein, Temperaturwert des Sensors Y ist viel zu klein oder viel zu groß). Die Quantisierung des qualitativen Symptoms kann auf drei Stufen begrenzt sein (grö-ßer/keine Abweichung/kleiner), kann aber auch mehr Stufen aufweisen.

Bei der Durchführung des erfindungsgemäßen Verfahrens wird angenommen, dass ein entsprechendes Simulationsmodell für die technische Anlage vorliegt. Dazu wird angenommen, dass das Simulationsmodell mögliche Anomalien und deren Ursachen umfasst, wobei die Intensität der Anomalien variiert werden kann oder wobei die Anomalien binär ausgebildet sind (Anomalie vorhanden/nicht vorhanden).

Es werden alle Simulationen von möglichen einzeln auftretenden Ursachen für Anomalien mit dem simulierten Normalbetrieb verglichen und die Differenz als Symptom gebildet. Da die Simulation das grundsätzliche Verhalten korrekt wiedergibt, ist auch das Symptom im Allgemeinen korrekt. Hierbei sei auch auf die Beschreibung des Ausführungsbeispiels und der damit verbundenen Beschreibung von Versuchen verwiesen.

Der große Vorteil des erfindungsgemäßen Verfahrens liegt darin, dass die Anforderung an das Simulationsmodell erheblich sinkt, da es nicht exakt und für alle Fälle kalibriert sein muss. Damit ist das Verfahren, im Gegensatz zu vielen anderen, überhaupt praktisch einsetzbar.

Es können im Verfahrensschritt g nur diejenigen Symptome identifiziert und in dem Datenspeicher hinterlegt und/oder angezeigt werden, die identisch mit dem beim realen Betrieb der technischen Anlage bestimmten Symptom sind.

Es ist aber auch möglich, dass in den Verfahrensschritten b und c für jede in Frage kommende Ursache für eine Anomalie eine Intensität der Ursache für die Anomalie in einem bestimmten Bereich variiert wird, wobei bei der Variation eine Mehrzahl von Symptomen ableitbar sein kann, die, falls zutreffend, zur Identifizierung der Ursache für die Anomalie im Schritt g verwendet werden. Hintergrund hierfür ist, dass insbesondere bei Nichtlinearitäten in der technischen Anlage eine Variation der Intensität einer Anomalie zu unterschiedlichen Symptomen (je nach Intensitätsgrad) führen kann. Durch das entsprechend weitergebildete Verfahren kann die Erkennung der Ursache für eine Anomalie deutlich verbessert werden.

Die obige Aufgabe wird zudem gelöst durch ein Computerprogramm mit durch einen Computer ausführbaren Programmcodeanweisungen zur Implementierung des zuvor erläuterten Verfahrens. Zudem wird die Aufgabe gelöst durch ein Speichermedium mit einem durch einen Computer ausführbaren, zuvor erläuterten Computerprogramm und ein Computersystem, auf dem ein Computerprogramm wie zuvor erläutert implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:

FIG 1     eine technische Anlage mit drei Tanks;

FIG 2     einen Vergleich von realen und simulierten Messdaten;

FIG 3     eine Symptombildung bei einer ersten Anomalie;

FIG 4     eine Symptombildung bei einer zweiten Anomalie; und

FIG 5     eine Symptombildung bei einer dritten Anomalie.

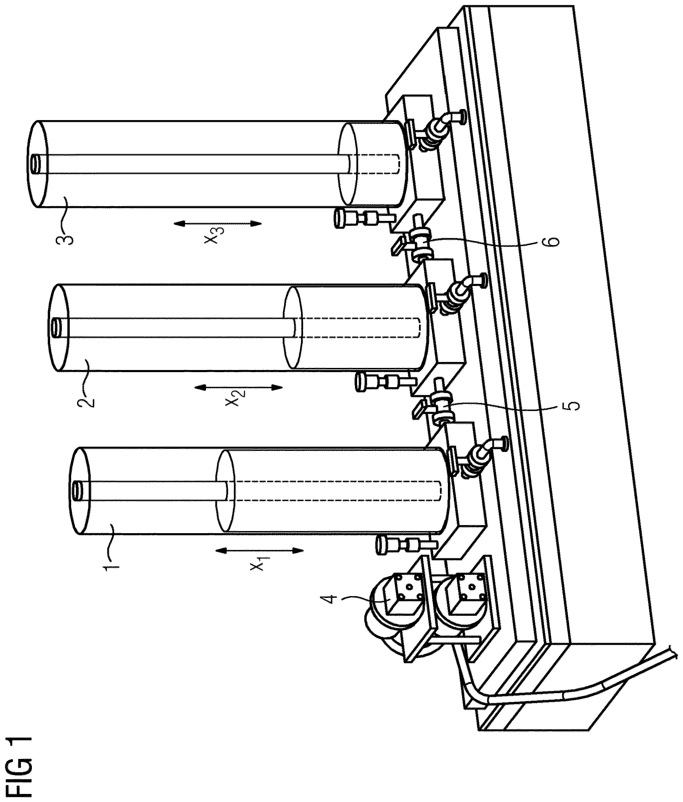

In FIG 1 ist ein realer Dreitankprüfstand als technische Anlage schematisch dargestellt. Der Dreitankprüfstand weist einen ersten Tank 1, einen zweiten Tank 2 und einen dritten Tank 3 auf. Eine Pumpe 4 ist an den ersten Tank 1 und an den dritten Tank 3 in FIG 1 angeschlossen, um beispielsweise Wasser in den jeweiligen Tank 1, 3 pumpen zu können.

Der erste Tank 1 ist mit dem zweiten Tank 2 mittels einer ersten Verbindungsleitung 5 verbunden. Der zweite Tank 2 ist mit dem dritten Tank 3 mittels einer zweiten Verbindungsleitung 6 verbunden. Aus dem dritten Tank kann Wasser über einen Ablauf entweichen. Die Füllhöhen des Wassers in den drei Tanks 1, 2, 3 nehmen von dem ersten Tank 1 nach rechts zu dem dritten Tank 3 hin in Fig 1 ab.

Die nichtlineare exakte Modellierung der Füllhöhen in den drei Tanks 1, 2, 3 ergibt folgende Zusammenhänge:

$$\dot{x}_1 = \begin{cases} \frac{1}{A_1}\left(u_1 - q_1\sqrt{2g(x_1 - x_2)}\right) falls\ x_1 \geq x_2 \\ \frac{1}{A_1}\left(u_1 + q_1\sqrt{2g(x_2 - x_1)}\right) falls\ x_1 < x_2 \end{cases}$$

$$\dot{x}_2 = \begin{cases} \frac{1}{A_2}\left(-q_1\sqrt{2g(x_2 - x_1)} - q_2\sqrt{2g(x_2 - x_3)}\right) falls\ x_2 \geq x_1 \wedge x_2 \geq x_3 \\ \frac{1}{A_2}\left(-q_1\sqrt{2g(x_2 - x_1)} + q_2\sqrt{2g(x_3 - x_2)}\right) falls\ x_2 \geq x_1 \wedge x_2 < x_3 \\ \frac{1}{A_2}\left(q_1\sqrt{2g(x_1 - x_2)} - q_2\sqrt{2g(x_2 - x_3)}\right) falls\ x_2 < x_1 \wedge x_2 \geq x_3 \\ \frac{1}{A_2}\left(q_1\sqrt{2g(x_1 - x_2)} + q_2\sqrt{2g(x_3 - x_2)}\right) falls\ x_2 < x_1 \wedge x_2 < x_3 \end{cases}$$

$$\dot{x}_3 = \begin{cases} \frac{1}{A_3}\left(u_2 - q_2\sqrt{2g(x_3 - x_2)} - q_3\sqrt{2gx_3}\right) falls\ x_3 \geq x_2 \\ \frac{1}{A_3}\left(u_2 + q_2\sqrt{2g(x_2 - x_3)} - q_3\sqrt{2gx_3}\right) falls\ x_3 < x_2 \end{cases}$$

Dabei bezeichnen:

$x_1$  die Füllhöhe des Wassers im ersten Tank 1;
$x_2$  die Füllhöhe des Wassers im zweiten Tank 2;
$x_3$  die Füllhöhe des Wassers im dritten Tank 3;
$A_1$  die Querschnittsfläche des ersten Tanks 1;
$A_2$  die Querschnittsfläche des zweiten Tanks 2;
$A_3$  die Querschnittsfläche des dritten Tanks 3;
$q_1$  die Querschnittsfläche der ersten Verbindungsleitung 5 zwischen dem ersten Tank 1 und dem zweiten Tank 2;
$q_2$  die Querschnittsfläche der zweiten Verbindungsleitung 6 zwischen dem zweiten Tank 2 und dem dritten Tank 3;
$q_3$  die Querschnittsfläche im Ablauf von Tank 3;
g  die Erdbeschleunigung;
$u_1$  den Zulauf in den ersten Tank 1; und
$u_2$  den Zulauf in den dritten Tank 3.

Der Betrieb dieser einfachen technischen Anlage kann durch eine Linearisierung des Systems simuliert werden. Dabei kann das folgende Simulationsmodell verwendet werden:

$$\dot{x}^* = Ax^* + Bu^*, \ x^*(0) = x_o^*$$

Dabei gilt für $[A|B]$:

$$\left(\begin{array}{ccc|cc} \frac{-q_1}{A_1}\sqrt{\frac{g}{2(x_1 - x_2)}} & \frac{q_1}{A_1}\sqrt{\frac{g}{2(x_1 - x_2)}} & 0 & \frac{1}{A_1} & 0 \\ \frac{q_1}{A_2}\sqrt{\frac{g}{2(x_1 - x_2)}} & \frac{-1}{A_2}\left(q_1\sqrt{\frac{g}{2(x_1 - x_2)}} + q_2\sqrt{\frac{g}{2(x_2 - x_3)}}\right) & \frac{q_2}{A_2}\sqrt{\frac{g}{2(x_2 - x_3)}} & 0 & 0 \\ 0 & \frac{q_2}{A_3}\sqrt{\frac{g}{2(x_2 - x_3)}} & \frac{-1}{A_3}\left(q_2\sqrt{\frac{g}{2(x_2 - x_3)}} + q_3\sqrt{\frac{g}{2x_3}}\right) & 0 & \frac{1}{A_3} \end{array}\right)$$

Das lineare Simulationsmodell gilt lediglich für absteigende Füllstände und wird als nicht kalibriert angenommen. Diese fehlende Kalibrierung wird dadurch erzielt, dass die Parameter des Simulationsmodells um 20% variiert werden.

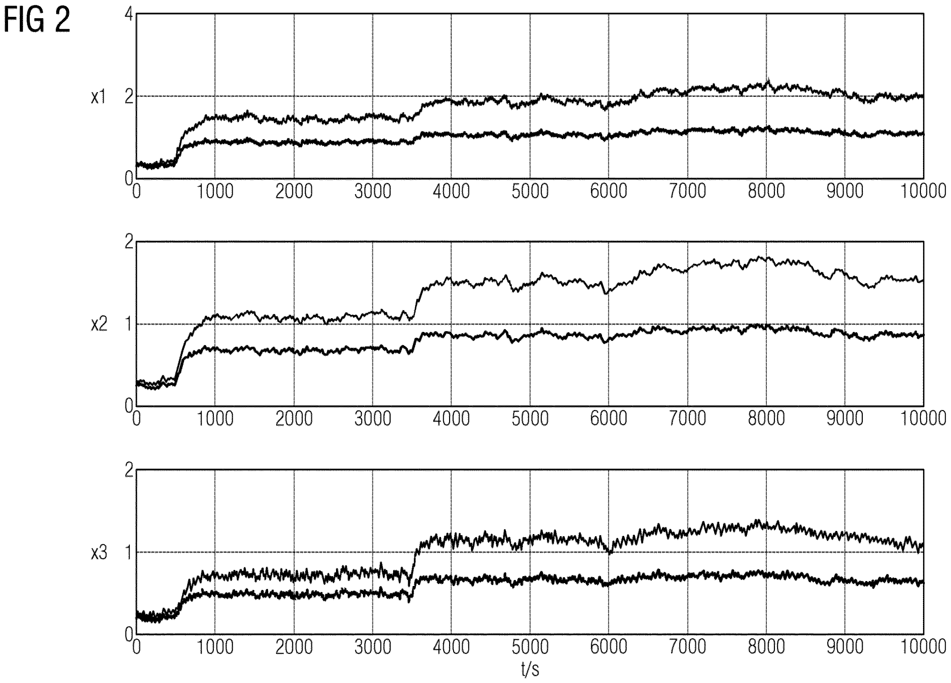

In FIG 2 ist ein Vergleich der Realdaten für die Füllhöhen x1, x2 und x3 in den drei Tanks 1, 2, 3 (nichtlineare Simulation) mit simulierten Daten, die mit dem zuvor erläuterten linearen Simulationsmodell für einen Zulaufsprung in den Zuläufen des ersten Tanks 1 und des dritten Tanks 3 ermittelt wurde, gezeigt. Gut zu erkennen sind die durch die Parametervariation und die Linearisierung entstandenen Abweichungen zwischen Simulationsdaten und den Realdaten. Dabei sind in FIG 2 die realen Daten in den zeitlichen (Verlaufs-)Diagrammen jeweils oberhalb der simulierten Werte angeordnet (also größer). Es wird dabei auch deutlich, dass das prinzipielle Verhalten der technischen Anlage durch die Simulation nachgebildet wird.

Im Folgenden werden drei mögliche Ursachen für eine Anomalie im Betrieb des Dreitankprüfstands betrachtet:

- Ursache 1: Eine Teilblockade der Verbindungsleitung 5 zwischen dem ersten Tank 1 und dem zweiten Tank 2 (Verringerung der Querschnittsfläche $q_1$)
- Ursache 2: Eine Teilblockade der Verbindungsleitung 6 zwischen dem zweiten Tank 2 und dem dritten Tank 3 (Verringerung der Querschnittsfläche $q_2$)
- Ursache 3: Eine Leckage aus dem dritten Tank 3 (Verringerung des Zulaufs $u_2$ in den dritten Tank 3)

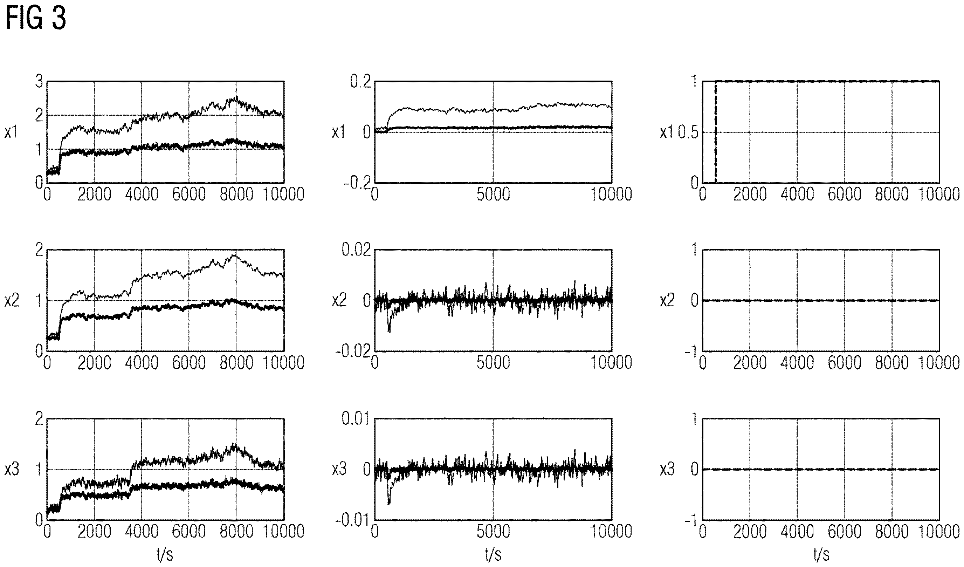

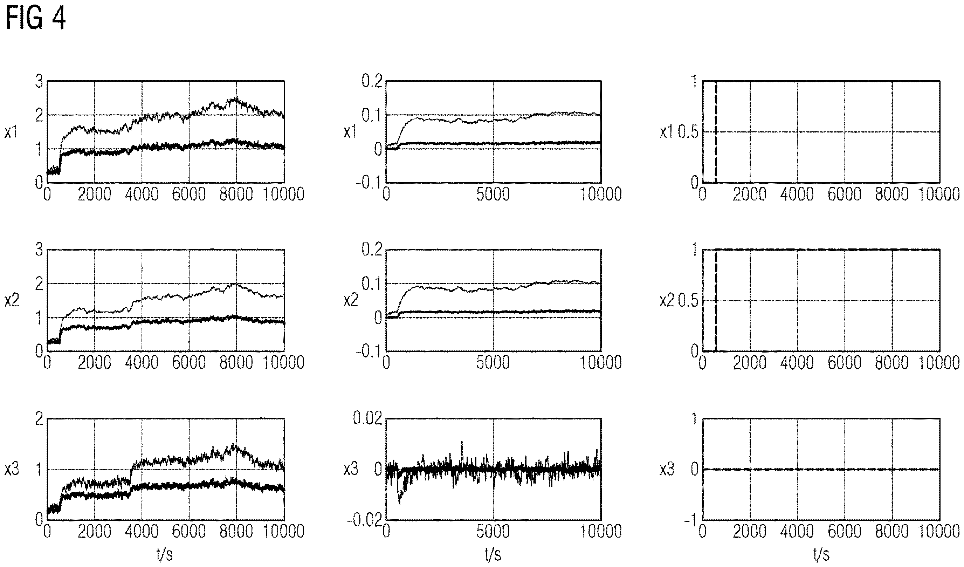

In den Figuren 3 bis 5 werden die drei Ursachen 1-3 für Anomalien nacheinander behandelt, wobei in der jeweiligen linken Spalte die realen Messdaten (d.h. die Füllhöhen $x_1$, $x_2$, $x_3$) mit den simulierten Daten verglichen werden. Hier zeigt sich, dass eine Zuordnung der Anomalien schwierig ist, da die oben erläuterten Modellfehler (20%) zu größeren Abweichungen zwischen simulierten und realen Daten führen als die Abweichungen aufgrund der Anomalien.

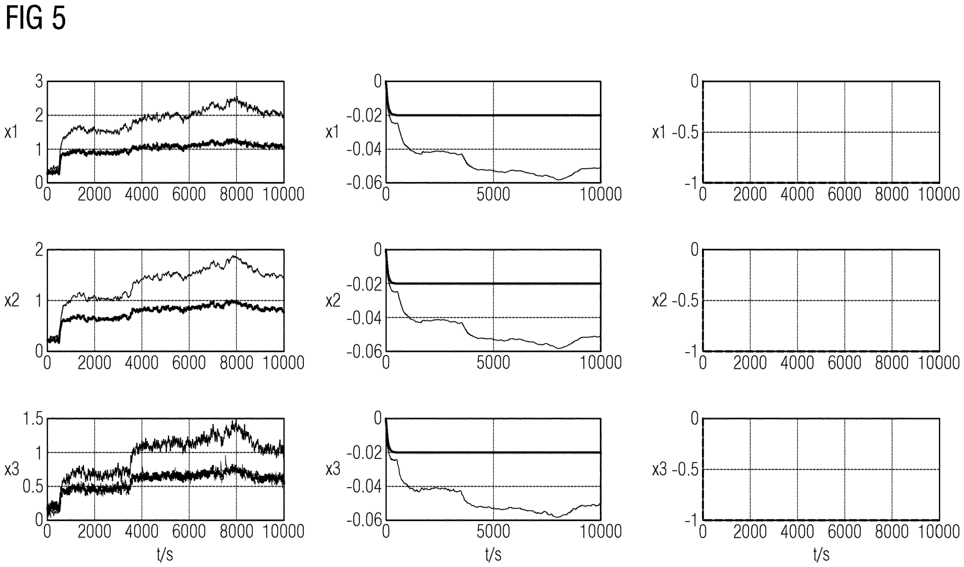

In der mittleren Spalte sind jeweils die Symptome als exakte Werte dargestellt, die für eine Diagnose noch nicht ideal geeignet sind. In der rechten Spalte werden jeweils die Symptome dargestellt, wobei die Symptome jeweils auf drei Stufen (0 = gleich, 1 = zu groß, -1 = zu klein) quantisiert wurden. In FIG 3 beispielsweise weist das quantisierte Symptom für die Füllhöhe $x_1$ einen Wert "zu groß" (hier mit 1 bezeichnet) auf. In FIG 5 beispielsweise weisen alle drei Symptome einen Wert "zu klein" (mit -1 bezeichnet) auf. Es zeigt sich, dass die quantisierten (qualitativen) Symptome der realen sowie der simulierten Messdaten übereinstimmen.

Die ermittelten Symptome beim realen Betrieb des Dreitankprüfstands werden im Anschluss mit jedem Symptom verglichen, welches zuvor bei Simulationen der Betriebszustände bei Vorliegen eines der auftretenden Ursachen für eine Anomalie abgeleitet worden ist. Daraufhin werden diejenigen Symptomen identifiziert, die ein bestimmte Ähnlichkeitsmaß zu dem beim realen Betrieb des Dreitankprüfstands bestimmten Symptom aufweisen und die zu den identifizierten Symptomen gehörigen Ursachen für die Anomalie in einem Datenspeicher hinterlegt und/oder mittels einer Anzeigeeinheit einem Bediener des Dreitankprüfstands visuell dargeboten. Aufgrund der zuvor erwähnten Übereinstimmung der Symptome von realen und simulierten Messdaten ist die Zuordnung der Symptome zu Ursachen für die jeweilige Anomalie eindeutig.

Obwohl die Erfindung im Detail durch das bevorzugte Ausführungsbeispiel näher illustriert und beschrieben wurde, so ist die Erfindung nicht auf das offenbarte Beispiel eingeschränkt und andere Variationen können vom Fachmann hieraus abgeleitet werden, ohne den Schutzumfang der Erfindung zu verlassen.

## Patentansprüche

1. Verfahren zur Ermittlung einer Ursache für eine Anomalie beim Betrieb einer technischen Anlage, insbesondere Fertigungs- oder Prozessanlage, umfassend:

   a) Simulation eines fehlerfreien Betriebs der technischen Anlage mittels eines computerimplementierten Simulationswerkzeuges;
   b) Simulation einer Mehrzahl von einzeln beim Betrieb der technischen Anlage auftretenden Ursachen für eine Anomalie;
   c) Für die Mehrzahl von einzeln auftretenden Ursachen für eine Anomalie, jeweils Vergleichen des simulierten fehlerfreien Betriebszustandes mit dem simulierten Betriebszustand bei Vorliegen einer der auftretenden Ursachen für eine Anomalie, wobei aus dem Vergleich jeweils ein qualitatives Symptom abgeleitet wird, welches eine qualitative Abweichung des Betriebszustandes von dem fehlerfreien Betriebszustand beschreibt;
   d) Realer Betrieb der technischen Anlage;
   e) Für den Fall, dass eine Anomalie beim realen Betrieb der technischen Anlage auftritt, Bestimmen eines qualitativen Symptoms der Anomalie;
   f) Vergleich des beim realen Betrieb der technischen Anlage bestimmten Symptoms mit jedem Symptom, das zuvor bei den Simulationen der Betriebszustände bei Vorliegen eines der auftretenden Ursachen für eine Anomalie abgeleitet worden ist;
   g) Identifizieren von denjenigen abgeleiteten Symptomen, die ein bestimmtes Ähnlichkeitsmaß zu dem beim realen Betrieb der technischen Anlage bestimmten Symptom aufweisen und Hinterlegen der zu den identifizierten Symptomen gehörigen Ursachen für die Anomalie in einem Datenspeicher der technischen Anlage und/oder Anzeigen der zu den identifizierten Symptomen gehörigen Ursachen für die Anomalie.

**2.** Verfahren nach Anspruch 1, bei dem in Schritt g diejenigen Symptome identifiziert und in dem Datenspeicher hinterlegt und/oder angezeigt werden, die identisch mit dem beim realen Betrieb der technischen Anlage bestimmten Symptom sind.

**3.** Verfahren nach Anspruch 1 oder 2, bei dem in den Schritten b und c gemäß Anspruch 1 für jede in Frage kommende Ursache für eine Anomalie eine Intensität der Ursache für die Anomalie in einem bestimmten Bereich variiert wird, wobei bei der Variation eine Mehrzahl von Symptomen ableitbar sein kann, die, falls zutreffend, zur Identifizierung der Ursache für die Anomalie in Schritt g gemäß Anspruch 1 verwendet werden.

**4.** Computerprogramm mit durch einen Computer ausführbaren Programmcodeanweisungen zur Implementierung des Verfahrens nach einem der Ansprüche 1 bis 3.

**5.** Speichermedium mit einem durch einen Computer ausführbaren Computerprogramm gemäß Anspruch 4.

**6.** Server, insbesondere Operator Station Server, für eine technische Anlage, insbesondere Fertigungs- oder Prozessanlage, auf dem ein Computerprogramm nach Anspruch 4 implementiert ist.

**7.** Leitsystem für eine technische Anlage, insbesondere Fertigungs- oder Prozessanlage, welches wenigstens einen Server, insbesondere Operator Station Server, gemäß Anspruch 6 und einen Client, insbesondere Operator Station Client, aufweist.

**Claims**

**1.** Method for determining a cause of an anomaly in the operation of a technical plant, in particular a production or process plant, comprising:

a) Simulating an error-free operation of the technical plant by means of a computer-implemented simulation tool;
b) Simulating a plurality of individual causes of an anomaly occurring during operation of the technical plant;
c) For the plurality of individually occurring causes of an anomaly, in each case comparing the simulated error-free operating state with the simulated operating state when one of the occurring causes of an anomaly is present, wherein in each case a qualitative symptom is derived from the comparison which describes a qualitative deviation of the operating state from the error-free operating state;
d) Real operation of the technical plant;
e) If an anomaly occurs during real operation of the technical plant, determining a qualitative symptom of the anomaly;
f) Comparing the symptom determined during real operation of the technical plant with each symptom which has previously been derived in the simulations of the operating states when one of the occurring causes of an anomaly is present;
g) Identifying those derived symptoms which have a determined degree of similarity to the symptom determined during real operation of the technical plant, and storing the causes of the anomaly associated with the identified symptoms in a data memory of the technical plant and/or displaying the causes of the anomaly associated with the identified symptoms.

**2.** Method according to claim 1, wherein in method step g, those symptoms can be identified and stored in the data memory and/or displayed that are identical to the symptom determined during real operation of the technical plant.

**3.** Method according to claim 1 or 2, in which in steps b and c according to claim 1, for each possible cause of an anomaly, an intensity of the cause of the anomaly is varied within a specific range, wherein upon variation it is possible to derive a plurality of symptoms, which, if applicable, are used to identify the cause of the anomaly in step g according to claim 1.

**4.** Computer program with program code instructions that can be executed by a computer for implementing the method according to one of claims 1 to 3.

**5.** Storage medium with a computer program that can be executed by a computer according to claim 4.

**6.** Server, in particular an operator station server, for a technical plant, in particular a production or process plant, on which a computer program according to claim 4 is implemented.

7. Control system for a technical plant, in particular a production or process plant, having at least a server, in particular an operator station server, according to claim 6 and a client, in particular an operator station client.

**Revendications**

1. Procédé de détermination de la cause d'une anomalie lors du fonctionnement d'une installation technique, en particulier d'une installation de fabrication ou de processus, comprenant :

a) simulation d'un fonctionnement sans défaut de l'installation technique au moyen d'un outil de simulation mis en oeuvre par ordinateur ;
b) simulation de plusieurs causes, se produisant individuellement lors du fonctionnement de l'installation technique, d'une anomalie ;
c) pour les plusieurs causes se produisant individuellement d'une anomalie, comparaison respectivement de l'état de fonctionnement sans défaut simulé à l'état de fonctionnement simulé en présence de l'une des causes se produisant d'une anomalie, dans lequel on déduit de la comparaison respectivement un symptôme qualitatif, qui décrit un écart qualitatif de l'état de fonctionnement à l'état de fonctionnement sans défaut ;
d) fonctionnement réel de l'installation technique ;
e) dans le cas où une anomalie se produit lors du fonctionnement réel de l'installation technique, détermination d'un symptôme qualitatif de l'anomalie ;
f) comparaison du symptôme déterminé lors du fonctionnement réel de l'installation technique à chaque symptôme, qui a été déduit précédemment lors des simulations des états de fonctionnement en présence de l'une des causes se produisant d'une anomalie ;
g) identification des symptômes déduits, qui ont un degré de similitude déterminé avec le symptôme déterminé lors du fonctionnement réel de l'installation technique et mise en mémoire des causes, appartenant aux symptômes identifiés, de l'anomalie dans une mémoire de données de l'installation technique et/ou affichage des causes, appartenant aux symptômes identifiés, de l'anomalie.

2. Procédé suivant la revendication 1, dans lequel dans le stade g on identifie et on met en mémoire dans la mémoire de données et/ou on affiche les symptômes, qui sont identiques aux symptômes déterminés lors du fonctionnement réel de l'installation technique.

3. Procédé suivant la revendication 1 ou 2, dans lequel, dans les stades b et c suivant la revendication 1, on fait varier dans une plage déterminée, pour chaque cause venant en question d'une anomalie, une intensité de la cause de l'anomalie, dans lequel, lors de la variation, on peut déduire une pluralité de symptômes, qui, s'ils se produisent, sont utilisés pour identifier de la cause de l'anomalie dans le stade g suivant la revendication 1.

4. Programme d'ordinateur comprenant des instructions de code de programme pouvant être exécutées par un ordinateur pour la mise en oeuvre du procédé suivant l'une des revendications 1 à 3.

5. Support de mémoire comprenant un programme d'ordinateur pouvant être exécuté par un ordinateur suivant la revendication 4.

6. Serveur, en particulier operator station server, pour une installation technique, en particulier une installation de fabrication ou de processus, sur lequel est mis en oeuvre un programme d'ordinateur suivant la revendication 4.

7. Système de conduite d'une installation technique, en particulier d'une installation de fabrication ou de processus, qui comporte au moins un serveur, en particulier un operator station server suivant la revendication 6 et un client, en particulier un operator station client.

FIG 1

EP 4 272 042 B1

FIG 2

FIG 3

# FIG 4

EP 4 272 042 B1

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2568348 A1
- EP 2587328 A1
- EP 2587329 A1
- EP 2068220 A1

**In der Beschreibung aufgeführte Nicht-Patentliteratur**

- **VENKAT VENKATASUBRAMANIAN ; RAGHU-NATHAN RENGASWAMY ; KEWEN YIN ; SURYA N. KAVURI.** A review of process fault detection and diagnosis. *Quantitative model-based methods; Computers and Chemical Engineering,* 2003, (27), 293-31

- **VENKAT VENKATASUBRAMANIAN ; RAGHU-NATHAN RENGASWAMY ; SURYA N. KAVURI.** A review of process fault detection and diagnosis. *Qualitative Models and Search Strategies; Computers and Chemical Engineering,* 2003, (27), 313-326
- **R. ISERMANN.** *Modellbasierte Überwachung und Fehlerdiagnose von kontinuierlichen technischen Prozessen,* Juni 2010
- **S. X. DING.** Model-Based Fault Diagnosis Techniques. *Duisburg,* 2013